(19) **Europäisches Patentamt**
**European Patent Office**
**Office européen des brevets**

(11) **EP 3 919 382 A1**

(12) **EUROPEAN PATENT APPLICATION**
published in accordance with Art. 153(4) EPC

(43) Date of publication:
08.12.2021 Bulletin 2021/49

(51) Int Cl.:
**B64D 1/16** (2006.01)    **A01M 7/00** (2006.01)
**A01M 9/00** (2006.01)

(21) Application number: 20763366.0

(22) Date of filing: 13.02.2020

(86) International application number:
**PCT/CN2020/075040**

(87) International publication number:
**WO 2020/173306 (03.09.2020 Gazette 2020/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 27.02.2019 CN 201910146436

(71) Applicant: **Guangzhou Xaircraft Technology Co., Ltd**
**Tianhe District**
**Guangzhou,**
**Guangdong 510000 (CN)**

(72) Inventor: **SU, Jiahao**
**Guangzhou, Guangdong 510000 (CN)**

(74) Representative: **Rapisardi, Mariacristina**
**Ufficio Brevetti Rapisardi S.r.l.**
**Via Serbelloni, 12**
**20122 Milano (IT)**

(54) **METHOD AND DEVICE FOR ADJUSTING BROADCASTING AMOUNT, UNMANNED AERIAL VEHICLE, AND STORAGE MEDIUM**

(57)     Provided is a method and device for adjusting a broadcast dosage, an unmanned aerial vehicle and a storage medium. Applied to the unmanned aerial vehicle for broadcast through a material taking device driven by an electric motor, the method particularly includes: receiving a calibration instruction including a calibration rotation speed and calibration duration, controlling the electric motor to run at the calibration rotation speed within the calibration duration to discharge a material to be broadcast; acquiring a flight parameter and an actual discharge amount of the material to be broadcast discharged by the material taking device within the calibration duration; determining an adjustment coefficient between a flight speed and a rotation speed of the electric motor according to the flight parameter and the actual discharge amount; and adjusting the rotation speed of the electric motor to adjust the broadcast dosage according to the adjustment coefficient.

a calibration instruction is received the calibration instruction including a calibration rotation speed and calibration duration — S 101

The electric motor is controlled to run at the calibration rotation speed within the calibration duration to discharge a material to be broadcast — S 102

A flight parameter and an actual discharge amount of the material to be broadcast discharged by the material taking device within the calibration duration are acquired — S 103

An adjustment coefficient between a flight speed and a rotation speed of the electric motor is determined according to the flight parameter and the actual discharge amount — S 104

In a process of broadcasting the material to be broadcast the rotation speed of the electric motor is adjusted according to the adjustment coefficient — S 105

Fig. 1

**Description**

**Cross-Reference to Related Application**

The disclosure claims the priority for Chinese Patent Application No. "201910146436.4", submitted to the Chinese Patent Office on February 27, 2019 and entitled "Method and Device for Adjusting Broadcast dosage, Unmanned Aerial Vehicle and Storage Medium", which is incorporated herein in its entirety by reference.

**Technical Field**

The disclosure relates to the technical field of unmanned aerial vehicles, in particular to a method and device for adjusting a broadcast dosage, an unmanned aerial vehicle and a storage medium.

**Background**

With development of unmanned aerial vehicle technology, it is possible for an unmanned aerial vehicle to perform broadcast owing to its advantages such as vertical take-off and landing and not being affected by terrain.
In a plant protection unmanned aerial vehicle for broadcasting materials, a broadcast device is carried on the unmanned aerial vehicle, and drives, through an electric motor, a material taking wheel to discharge the materials, so as to broadcast the material. After a usage per unit area is set, a rotation speed of the electric motor is usually unchanged, and the unmanned aerial vehicle broadcasts the materials according to a set flight speed and flight altitude and a preset flight route.
However, due to influence of external environment, the flight speed of the unmanned aerial vehicle cannot be kept unchanged all the time. For example, there is a pre-deceleration or acceleration stage when the unmanned aerial vehicle turns, avoids obstacles or starts broadcast, which leads to the problem that the unmanned aerial vehicle broadcasts the materials unevenly and cannot achieve accurate broadcast.

**Summary**

Embodiments of the disclosure provides a method and device for adjusting a broadcast dosage, an unmanned aerial vehicle and a storage medium, so as to at least solve the problems that an existing unmanned aerial vehicle is uneven in material broadcast and may not accurately broadcast materials.
In a first aspect, the embodiment of the disclosure provides a method for adjusting a broadcast dosage, applied to an unmanned aerial vehicle for broadcast through a material taking wheel driven by an electric motor. The method includes:

receiving a calibration instruction, the calibration instruction including a calibration rotation speed and calibration duration;

controlling the electric motor to run at the calibration rotation speed within the calibration duration to discharge a material to be broadcast;

acquiring a flight parameter and an actual discharge amount of the material to be broadcast discharged by the material taking wheel within the calibration duration;

determining an adjustment coefficient between a flight speed and a rotation speed of the electric motor according to the flight parameter and the actual discharge amount; and

adjusting, in a process of broadcasting the material to be broadcast, the rotation speed of the electric motor according to the adjustment coefficient.

Optionally, the flight parameter includes the flight speed, a flight altitude and a usage per unit area of the material to be broadcast, and determining an adjustment coefficient between a flight speed and a rotation speed of the electric motor according to the flight parameter and the actual discharge amount includes:

determining a first linear coefficient between a discharge speed and the rotation speed of the electric motor according to the actual discharge amount, the calibration rotation speed and the calibration duration;

determining a second linear coefficient between the discharge speed and the flight speed according to the flight altitude and the usage per unit area; and

determining the adjustment coefficient between the flight speed and the rotation speed of the electric motor based on the first linear coefficient and the second linear coefficient.

Optionally, the calibration rotation speed is 0.5 times as fast as the maximum rotation speed of the electric motor, and controlling the electric motor to run at the calibration rotation speed within the calibration duration to discharge a material to be broadcast includes:

controlling the electric motor to run at a speed 0.5 times as fast as the maximum rotation speed within the calibration duration to discharge the material to be broadcast;

determining a first linear coefficient between a discharge speed and the rotation speed of the electric motor according to the actual discharge amount, the calibration rotation speed and the calibration duration includes:

calculating a product of the calibration duration and the 0.5 times as fast as the maximum rotation speed; and

taking a ratio of the actual discharge amount to the product as the first linear coefficient.

Optionally, the calibration instruction includes a plurality of calibration rotation speeds, and controlling the electric motor to run at the calibration rotation speed within the calibration duration to discharge a material to be broadcast includes:
sequentially controlling the electric motor to run at each calibration speed for the calibration duration, so as to discharge the material to be broadcast.
Determining a first linear coefficient between a discharge speed and the rotation speed of the electric motor according to the actual discharge amount, the calibration rotation speed and the calibration duration includes:

generating a linear curve of the discharge speed and the rotation speed of the electric motor according to each calibration rotation speed and an actual discharging amount corresponding to each calibration rotation speed; and

determining the first linear coefficient between the discharge speed and the rotation speed of the electric motor according to the linear curve.

Optionally, determining a second linear coefficient between the discharge speed and the flight speed according to the flight altitude and the usage per unit area includes:

determining a broadcast width according to the flight altitude; and

calculating a product of the broadcast width and the usage per unit area, to obtain the second linear coefficient between the discharge speed and the flight speed. Optionally, adjusting the rotation speed of the electric motor according to the adjustment coefficient includes: acquiring a real-time flight speed of the unmanned aerial vehicle;

calculating a target rotation speed of the electric motor according to the real-time flight speed and the adjustment coefficient; and

adjusting the rotation speed of the electric motor to the target rotation speed to adjust the broadcast dosage of the material to be broadcast.

In a second aspect, an embodiment of the disclosure provides a device for adjusting a broadcast dosage, applied to an unmanned aerial vehicle for broadcast through a material taking wheel driven by an electric motor, the device including one or more processors and one or more memories for storing program units, wherein the program unit is executed by the processor, and the program unit includes:

a calibration instruction receiving component, configured to receive a calibration instruction, the calibration instruction including a calibration rotation speed and calibration duration;

a calibration control component, configured to control the electric motor to run at the calibration rotation speed within the calibration duration to discharge a material to be broadcast;

a parameter acquisition component, configured to acquire a flight parameter and an actual discharge amount of the material to be broadcast discharged by the material taking wheel within the calibration duration;

an adjustment coefficient determination component, configured to determine an adjustment coefficient between a flight speed and a rotation speed of the electric motor according to the flight parameter and the actual discharge amount; and

a broadcast dosage adjustment component, configured to adjust, in a process of broadcasting the material to be broadcast, the rotation speed of the electric motor according to the adjustment coefficient.

Optionally, the flight parameter includes the flight speed, a broadcast width and a usage per unit area of the material to be broadcast, and the adjustment coefficient determination component includes:

a first linear coefficient determination sub-component, configured to determine a first linear coefficient between a discharge speed and the rotation speed of the electric motor
according to the actual discharge amount, the calibration rotation speed and the calibration duration;

a second linear coefficient determination sub-component, configured to determine a second linear coefficient between the discharge speed and the flight speed according to the broadcast width and the usage per unit area; and

an adjustment coefficient determination sub-component, configured to determine the adjustment coefficient between the flight speed and the rotation speed of the electric motor based on the first linear coefficient and the second linear coefficient.

Optionally, the calibration rotation speed is 0.5 times as fast as the maximum rotation speed of the electric motor.
The calibration control component includes:
a first control sub-component, configured to control the electric motor to run at a speed 0.5 times as fast as the maximum rotation speed within the calibration duration to discharge the material to be broadcast.
The first linear coefficient determination sub-component includes:
a product calculation unit, configured to calculate a product of the calibration duration and 0.5 times as fast as the maximum rotation speed; and a first linear coefficient determination unit, configured to take a ratio of the actual discharge amount to the product as a first linear coefficient.
Optionally, the calibration instruction includes a plurality of calibration rotation speeds.
The calibration control component includes:
a second control sub-component, configured to sequentially control the electric motor to run at each calibration speed for the calibration duration, so as to discharge the material to be broadcast.
The first linear coefficient determination sub-component includes:

a linear curve fitting unit, configured to generate a linear curve of the discharge speed and the rotation speed of the electric motor according to each calibration rotation speed and an actual discharging amount corresponding to each calibration rotation speed; and

a second linear coefficient determination unit, configured to determine the first linear coefficient between the discharge speed and the rotation speed of the electric motor according to the linear curve.

Optionally, the second linear coefficient determination sub-component includes:

a broadcast width determination unit, configured to determine a broadcast width according to the flight altitude; and

a third linear coefficient determination unit, configured to calculate a product of the broadcast width and the usage per unit area, to obtain the second linear coefficient between the discharge speed and the flight speed.

Optionally, the broadcast dosage adjustment component includes:

a real-time flight speed acquisition sub-component, configured to acquire a real-time flight speed of the unmanned aerial vehicle;

a target rotation speed calculation sub-component, configured to calculate a target rotation speed of the electric motor according to the real-time flight speed and the adjustment coefficient; and

an adjustment sub-component, configured to adjust the rotation speed of the electric motor to the target rotation speed to adjust a broadcast dosage of the material to be broadcast.

In a third aspect, an embodiment of the disclosure provides an unmanned aerial vehicle. The unmanned aerial vehicle includes:

one or more processors; and

a storage device, configured to store one or more programs, wherein
when the one or more programs are executed by the one or more processors, the one or more processors to implement the method for adjusting the broadcast dosage stated in any embodiment of the disclosure.

In a fourth aspect, an embodiment of the disclosure provides a computer readable storage medium having a computer program stored thereon, and the program implements, when executed by a processor, the method for adjusting the broadcast dosage stated in any embodiment of the disclosure.

In the embodiment of the disclosure, after the calibration instruction including the calibration rotation speed and the calibration duration is received, the electric motor is controlled to run at the calibration rotation speed within the calibration duration to discharge the material to be broadcast, and the adjustment coefficient between the flight speed and the rotation speed of the electric motor is determined according to the flight parameter and the actual discharge amount of the material to be broadcast discharged by the material taking wheel within the calibration duration, such that the rotation speed of the electric motor may be adjusted according to the adjustment coefficient to adjust the broadcast dosage during broadcast of the material to be broadcast. In a calibration stage of the embodiment of the disclosure, the electric motor is controlled to run at the calibration rotation speed for the calibration duration to discharge different materials to be broadcast, thereby acquiring an adjustment coefficient between the flight speed and the rotation speed of the electric motor, realizing the rotation speed of the electric motor for driving the material taking wheel at different flight speeds of the unmanned aerial vehicle for the different materials to be broadcast, and realizing accurate variable broadcast.

## Brief Description of the Drawings

Fig. 1 is a flowchart of a method for adjusting a broadcast dosage provided by Embodiment 1 of the disclosure;

Fig. 2 is a schematic diagram of a material taking device of an embodiment of the disclosure;

Fig. 3 is a flowchart of a method for adjusting a broadcast dosage provided by Embodiment 2 of the disclosure;

Fig. 4 is a schematic diagram of a linear relation between an actual discharge amount and a rotation speed of an electric motor in Embodiment 2 of the disclosure;

Fig. 5 is a flowchart of a method for adjusting a broadcast dosage in one embodiment of the disclosure; and

Fig. 6 is a structural schematic diagram of a device for adjusting a broadcast dosage provided in an embodiment of the disclosure.

## Detailed Description of the Embodiments

The disclosure will be described in detail below with reference to accompanying drawings and in conjunction with embodiments. It may be understood that particular embodiments described herein are merely used to explain the disclosure, rather than limit the disclosure. In addition, it should be noted that, for the convenience of description, some rather than all of structures related to the disclosure are merely shown in the accompanying drawings.

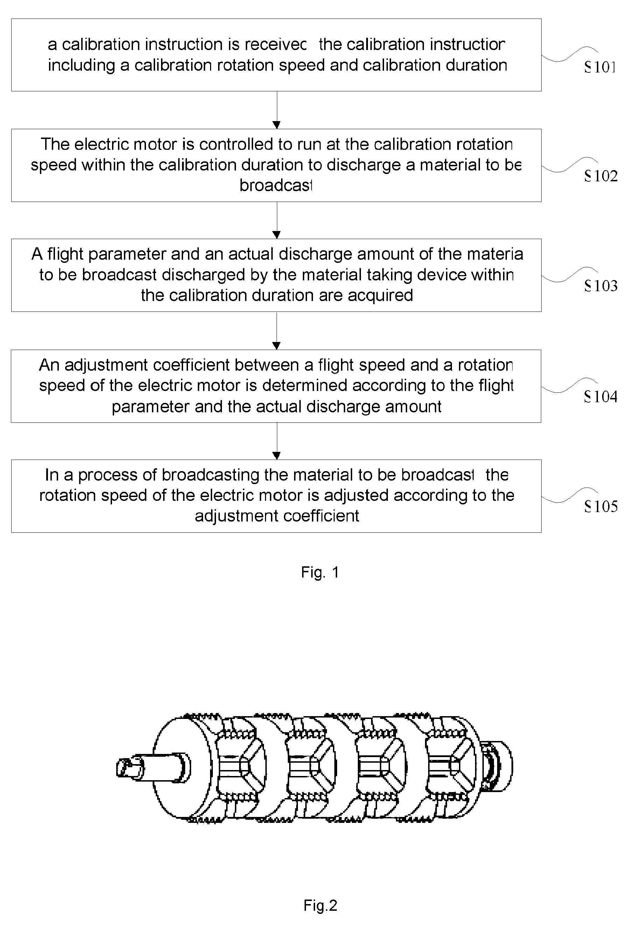

Fig. 1 is a flowchart of a method for adjusting a broadcast dosage provided by Embodiment 1 of the disclosure. The embodiment of the disclosure may be applied to the situation that an unmanned aerial vehicle broadcasts materials. This method may be implemented by a device for adjusting a broadcast dosage. This device may be implemented by software and/or hardware and integrated into an apparatus for executing this method. Optionally, as shown in Fig. 1, this method may include the following steps:

S101. A calibration instruction is received, the calibration instruction including a calibration rotation speed and calibration duration.

In this embodiment of the disclosure, a broadcast device is mounted on the unmanned aerial vehicle, the broadcast device is provided with a material taking wheel driven by an electric motor, the electric motor is electrically connected to a controller of the broadcast device, and the controller of the broadcast device is connected to a flight control component of the unmanned aerial vehicle.

Fig. 2 is a structural schematic diagram of a material taking wheel of an embodiment of the disclosure. The material taking wheel rotates under driving of the electric motor, during rotation of the material taking wheel, a material to be broadcast falls into a material taking cavity of the material taking wheel, and the material to be broadcast is discharged from an outlet of the broadcast device under the action of rotation, thereby broadcasting the material.

In a practical application, a ground station sends the calibration instruction to the flight control component of the unmanned aerial vehicle, and the broadcast device may receive the calibration instruction from the flight control component. The calibration instruction includes the calibration rotation speed of the electric motor and the calibration duration of running at the calibration rotation speed, among which the calibration rotation speed may be a rotation speed selected when the electric motor is calibrated, the electric motor is driven to rotate at the calibration rotation speed to discharge the material to be broadcast, and the calibration duration may be duration of running at the calibration rotation speed of the electric motor during calibration.

S102. The electric motor is controlled to run at the calibration rotation speed within the calibration duration to discharge a material to be broadcast.

Optionally, the broadcast device mounted on the unmanned aerial vehicle is provided with a material bin, in which the material to be broadcast may be loaded in advance. After receiving the calibration instruction, the broadcast device controls the electric motor to run at the calibration speed, and to discharge the material to be broadcast in the material bin within the calibration duration.

S103. A flight parameter and an actual discharge amount of the material to be broadcast discharged by the material taking wheel within the calibration duration are acquired.

In a practical application, after calibrated discharge by the broadcast device each time is completed, discharged materials to be broadcast may be weighed to acquire an actual discharge amount for calibration each time, the actual discharge amount and the flight parameter are input to the ground station and transmitted to the flight control component of the unmanned aerial vehicle through the ground station, and the broadcast device may obtain the flight parameter and the actual discharge amount from the flight control component.

S104. An adjustment coefficient between a flight speed and a rotation speed of the electric motor is determined according to the flight parameter and the actual discharge amount.

In this embodiment of the disclosure, the flight parameter may include the flight speed, a flight altitude and a usage per unit area of the material to be broadcast, among which the flight speed may be a flight speed when the unmanned aerial vehicle broadcasts the material, the flight altitude may be a ground clearance of the unmanned aerial vehicle for guaranteeing a broadcast width unchanged, and the usage per unit area may be a weight of the material to be broadcast used per mu. The adjustment coefficient may be an adjustment coefficient for adjusting the rotation speed of the electric motor according to the flight speed when the flight speed changes due to an external factor. A rotation speed of the electric motor corresponding to the flight speed may be dynamically adjusted through the adjustment coefficient.

The adjustment coefficient of this embodiment may be determined through the flight speed, the flight altitude, the usage per unit area of the material to be broadcast and the actual discharge amount. Optionally, first, a first linear coefficient between a discharge speed and the rotation speed of the electric motor is determined according to the actual discharge amount, the calibration duration and the calibration rotation speed, among which the discharge speed is a weight of the material to be broadcast discharged by the material taking wheel within unit time. Optionally, the first linear coefficient is equal to a ratio of the actual discharge amount to a product of the calibration duration and the calibration rotation speed. The first linear coefficient may dynamically adjust a discharge speed of the material taking wheel when the rotation speed of the electric motor changes, that is, the weight of the material to be broadcast that may be discharged every second when the electric motor rotates. Secondly, a second linear coefficient between the discharge speed and the flight speed may be determined according to the flight altitude and the usage per unit area. Optionally, the second linear coefficient is equal to a product of the broadcast width and usage per unit area. Finally, the first linear coefficient and the second linear coefficient may be used to determine the adjustment coefficient. Optionally, the discharge speed is equal to a product of the first linear coefficient and the rotation speed of the electric motor, and the discharge speed is equal to a product of the second linear coefficient and the flight speed as well. Combined with relevant calculation parameters of the first linear coefficient and the second linear coefficient, the adjustment coefficient between the motor speed of the electric motor and flight speed may be obtained.

S105. In a process of broadcasting the material to be broadcast, the rotation speed of the electric motor is adjusted according to the adjustment coefficient.

Optionally, during a broadcast process, the broadcast device acquires a flight speed of the unmanned aerial vehicle in real time from the flight control component, calculates a target speed of the electric motor according to the adjustment coefficient and the real-time flight speed, and then controls the electric motor to run at the target speed to drive the material discharging wheel to take the material, thereby realizing adjustment of a broadcast dosage of the material to be broadcast.

In a calibration stage of the embodiment of the disclosure, the electric motor is controlled to run at the calibration rotation speed for the calibration duration to discharge different materials to be broadcast, thereby acquiring an adjustment coefficient between the flight speed and the rotation speed of the electric motor when the unmanned aerial vehicle broadcast the different materials to be broadcast, realizing the rotation speed of the electric motor for driving the material taking wheel at different flight speeds for the different materials to be broadcast, and realizing accurate variable broadcast.

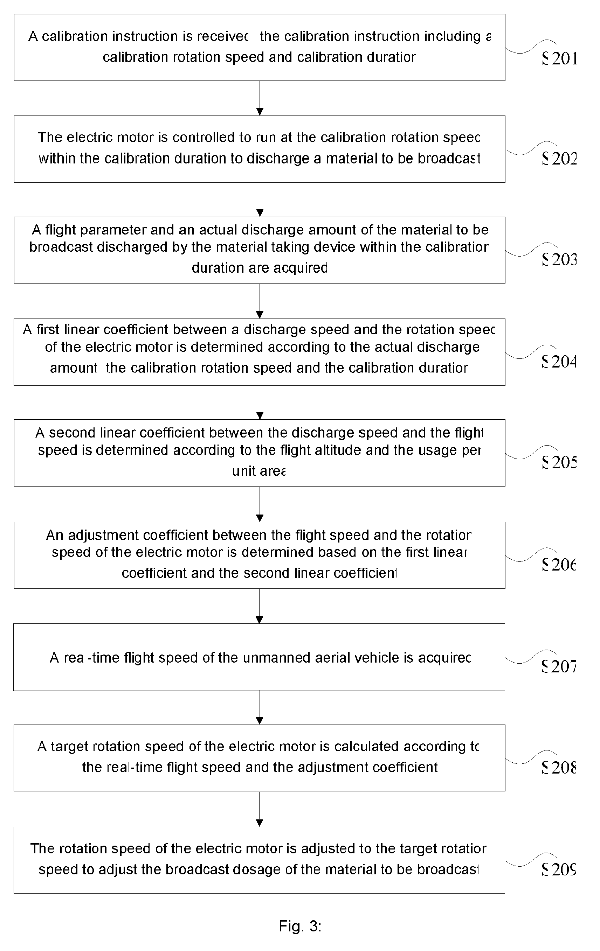

Fig. 3 is a flowchart of a method for adjusting a broadcast dosage provided by Embodiment 2 of the disclosure. This embodiment of the disclosure is optimized on the basis of Embodiment 1 above. Optionally, as shown in Fig. 3, the method for adjusting the broadcast dosage in this embodiment of the disclosure may include the following steps:

S201.A calibration instruction is received, the calibration instruction including a calibration rotation speed and calibration duration.

S202. The electric motor is controlled to run at the calibration rotation speed within the calibration duration to discharge a material to be broadcast.

In an optional embodiment of the disclosure, there is a linear relation between a rotation speed of the electric motor and a discharge speed, which presents different linearity in different rotation speed ranges. For example, at a low rotation speed, the electric motor has a large load moment, the electric motor rotates slowly, the material to be broadcast fills a material taking cavity fast, and increasing the rotation speed of the electric motor may make the discharge speed increase fast. While at a high rotation speed, the electric motor rotates fast, the material taking cavity is filled slowly by the material to be broadcast, and increasing the rotation speed of the electric motor causes the discharge speed to increase slowly. Preferably, the calibration rotation speed may be set at 0.5 times as fast as a maximum rotation speed of the electric motor, and the electric motor may be controlled to run at 0.5 times as fast as the maximum rotation speed within the calibration duration to drive the material taking wheel to discharge the material to be broadcast, such that broadcast accuracy may be improved through calibration at an intermediate rotation speed. In such a case, there is a linear relation between the rotation speed of the electric motor and the discharge speed of the material to be broadcast. For example, if the maximum rotation speed of the electric motor is 170 rpm, the calibration rotation speed may be set at 85 rpm. Certainly, when implementing the embodiment of the disclosure, those skilled in the art may also set other multiples of the maximum rotation speed of the electric motor for running and calibration, which may be particularly determined according to a size and a type of a broadcast material as long as it is guaranteed that there is the linear relation between the rotation speed of the electric motor and the discharge speed of the material to be broadcast at this time. The embodiment of the disclosure does not limit a value of the calibration rotation speed.

In another embodiment of the disclosure, it is also possible to select a plurality of different calibration rotation speeds for calibration at a ground station. For example, if a calibration instruction includes a plurality of calibration rotation speeds, an electric motor may be sequentially controlled to run at each calibration rotation speed for calibration duration to discharge a material to be broadcast, and acquire an actual discharge amount when running at the plurality of different calibration rotation speeds.

S203. A flight parameter and an actual discharge amount of the material to be broadcast discharged by the material taking wheel within the calibration duration are acquired.

Optionally, in this embodiment, the flight parameter and the actual discharge amount input from the ground station may be acquired from a flight control component. The flight parameter may include a flight speed, a flight altitude and a usage per unit area of the material to be broadcast, and the actual discharge amount may be an actual discharge amount when the electric motor runs at a speed 0.5 times as fast as the maximum rotation speed, or an actual discharge amount when the electric motor runs at the plurality of different calibration rotation speeds.

S204. A first linear coefficient between a discharge speed and the rotation speed of the electric motor is determined according to the actual discharge amount, the calibration rotation speed and the calibration duration.

In this embodiment of the disclosure, when the electric motor runs at a speed 0.5 times as fast as the maximum rotation speed for calibration, the first linear coefficient between the discharge speed and the rotation speed of the electric motor may be determined according to the actual discharge amount, the calibration rotation speed and the calibration duration. Optionally, the first linear coefficient may be determined according to the following formula (1):

$$Av = \frac{A}{T \times S_{mid}} S \qquad (1)$$

wherein $S_{mid}$ is the calibration rotation speed, which may be 0.5 times as fast as the maximum speed of the electric motor, A is an actual discharge amount in the case of the electric motor running at the calibration rotation speed $S_{mid}$ for the calibration duration T, Au is the discharge speed, and S is the rotation speed of the electric motor, so the first linear coefficient between the discharge speed Au and the electric motor speed S is $\frac{A}{T \times Smid}$.

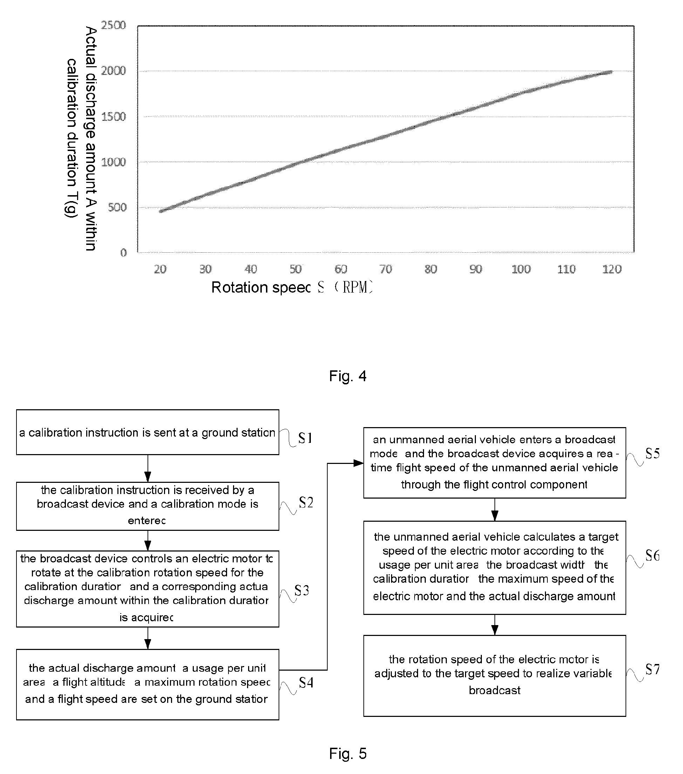

When calibration is performed at the plurality of different calibration rotation speeds, a linear curve between the discharge speed and the rotation speed of the electric motor may be generated according to each calibration rotation speed and an actual discharge amount corresponding to each calibration rotation speed, and then the first linear coefficient between the discharge speed and the rotation speed of the electric motor may be determined according to the linear curve. Fig. 4 is a schematic diagram of a linear relation between an actual discharge amount and a rotation speed of an electric motor in Embodiment 2 of the disclosure. As shown in Fig. 4, coordinate points of different calibration rotation speeds and their corresponding actual discharge amounts are added in two-dimensional coordinates of the actual discharge amount A and the rotation speed S of the electric motor, then a preset number of interpolation coordinate points are added by using an interpolation algorithm, and each coordinate point is fitted to obtain a linear curve, so the first linear coefficient may be determined according to the linear curve. For example, slope of a point, corresponding to the rotation speed, on the linear curve may be calculated, and then the slope may be determined to be the first linear coefficient above.

S205. A second linear coefficient between the discharge speed and the flight speed is determined according to the flight altitude and the usage per unit area.

In a practical application, the material to be broadcast is blown to the ground from a broadcast device through a blow member. When an airflow blow speed of the blow member is fixed, an initial speed of the material to be broadcast from the broadcast device is fixed. At the same time, due to a fixed flight altitude of an unmanned aerial vehicle, a range of the material to be broadcast falling from a fixed height at the fixed initial speed is also fixed, that is, a broadcast width of the material to be broadcast is fixed, so the following formula (2) may be acquired since the usage per unit area is equal to a ratio of a broadcast amount per unit time to a broadcast area per unit time:

$$D = \frac{Av \times t}{W \times V \times t} \qquad (2)$$

wherein Au is the discharge speed, t is flight time, W is the broadcast width, V is the flight speed, D is the usage per unit area, Au×t is the broadcast amount within the flight time t, and WxVxt is the broadcast area within the flight time t.

The following formula (3) may be obtained from formula (2):

$$Au = W \times D \times V \qquad (3)$$

That is, the second linear coefficient between the discharge speed Au and the flight speed V is W×D.

S206. An adjustment coefficient between the flight speed and the rotation speed of the electric motor is determined based on the first linear coefficient and the second linear coefficient.

Optionally, for the same material to be broadcast, a discharge speed Au should be the same, and a relation expression between the rotation speed of the electric motor and the flight speed may be obtained from formula (1) and formula (3) as follows (4):

$$S = \frac{D \times T \times S_{mid} \times W}{A} \times V \qquad (4)$$

wherein , $K = \frac{D \times T \times S_{mid} \times W}{A}$ ment coefficient between the speed S of the electric motor and flight speed V.

S207. A real-time flight speed of the unmanned aerial vehicle is acquired.

In a process of broadcasting the material according to a preset flight route by the unmanned aerial vehicle, the broadcast device may acquire the real-time flight speed of the unmanned aerial vehicle from the flight control component.

S208. A target rotation speed of the electric motor is calculated according to the real-time flight speed and the adjustment coefficient.

Optionally, since the flight control component receives the set usage per unit area D, the calibration rotation speed $S_{mid}$, the calibration duration T, the actual discharge amount A and the flight altitude from the ground station, the broadcast width W may be determined according to a preestablished correspondence table of a correspondence relation between the flight altitude and the broadcast width, the maximum rotation speed of the electric motor of the broadcast device may be acquired to determine the calibration rotation speed $S_{mid}$ at the same time, so the target rotation speed of the electric motor may be calculated according to formula (4).

S209. The rotation speed of the electric motor is adjusted to the target rotation speed to adjust the broadcast dosage of the material to be broadcast.

If a current rotation speed of the electric motor is inconsistent with the target rotation speed, the current rotation speed of the electric motor is adjusted to the target rotation speed, such that real-time adjustment of the broadcast dosage may be realized. Optionally, a difference between the current rotation speed and the target rotation speed may be calculated. If an absolute value of the difference is greater than a preset value, the current rotation speed of the electric motor is adjusted to the target rotation speed, which may avoid the problem of frequent adjustment of the rotation speed of the electric motor caused by frequent fluctuation of the flight speed.

In order to enable those skilled in the art to understand the embodiment of the disclosure more clearly, the embodiment of the disclosure will be described below in conjunction with Fig. 5 and examples:

Fig. 5 is a flowchart of a method for adjusting a broadcast dosage in one embodiment of the disclosure. As shown in Fig. 5, the method for adjusting the broadcast dosage in this example includes:

S1, a calibration instruction is sent at a ground station.

Optionally, after the ground station inputs a calibration rotation speed and calibration duration, generation of the calibration instruction is triggered and the calibration instruction is sent to a flight control component.

S2, the calibration instruction is received by a broadcast device and a calibration mode is entered.

For example, the broadcast device receives the calibration instruction from the flight control component connected to the same and the calibration mode is started.

S3, the broadcast device controls an electric motor to rotate at the calibration rotation speed for the calibration duration, and a corresponding actual discharge amount within the calibration duration is acquired.

S4, the actual discharge amount, a usage per unit area, a flight altitude, a maximum rotation speed and a flight speed are set on the ground station.

That is to say, the usage per unit area of a material to be broadcast, the flight altitude (a broadcast width may be determined according to the flight altitude), the maximum rotation speed of the electric motor, and an actual discharge amount and a flight speed during calibration are input at the ground station.

S5, an unmanned aerial vehicle enters a broadcast mode, and the broadcast device acquires a real-time flight speed of the unmanned aerial vehicle through the flight control component.

S6, the unmanned aerial vehicle calculates a target speed of the electric motor according to the usage per unit area, the broadcast width, the calibration duration, the maximum speed of the electric motor and the actual discharge amount.

Particularly, a target speed corresponding to the real-time flight speed may be calculated according to the formula (4) in Embodiment 2.

S7, the rotation speed of the electric motor is adjusted to the target speed to realize variable broadcast.

In a calibration stage of the embodiment of the disclosure, the electric motor is controlled to run at the calibration rotation speed for the calibration duration to discharge different materials to be broadcast, thereby acquiring an adjustment coefficient between the flight speed and the rotation speed of the electric motor when the different materials to be broadcast are broadcast, realizing the rotation speed of the electric motor for driving the material taking wheel at different flight speeds for the different materials to be broadcast, and realizing accurate variable broadcast.

An embodiment of the present invention provides a device for adjusting a broadcast dosage. The device for adjusting the broadcast dosage includes one or more processors and one or more memories for storing program units, among which the program unit is executed by the processor, and the program unit includes a calibration instruction receiving component, a calibration control component, a parameter acquisition component, an adjustment coefficient determination component and a broadcast dosage adjustment component.

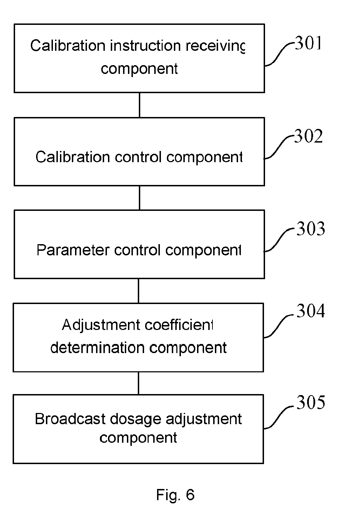

Fig. 6 is a structural schematic diagram of the device for adjusting the broadcast dosage of an embodiment of the disclosure. As shown in Fig. 6, the device for adjusting the broadcast dosage is applied to an unmanned aerial vehicle for broadcast through a material taking wheel driven by an electric motor, and specifically includes the calibration instruction receiving component 301, the calibration control component 302, the parameter acquisition component 303, the adjustment coefficient determination component 304 and the broadcast dosage adjustment component 305.

The calibration instruction receiving component 301 is configured to receive a calibration instruction, the calibration instruction including a calibration rotation speed and calibration duration;

The calibration control component 302 is configured to control the electric motor to run at the calibration rotation speed within the calibration duration to discharge a material to be broadcast;

The parameter acquisition component 303 is configured to acquire a flight parameter and an actual discharge amount of the material to be broadcast discharged by the material taking wheel within the calibration duration;

The adjustment coefficient determination component 304 is configured to determine an adjustment coefficient between a flight speed and a rotation speed of the electric motor according to the flight parameter and the actual discharge amount; and

the broadcast dosage adjustment component 305 is configured to, in a process of broadcasting the material to be broadcast, the rotation speed of the electric motor according to the adjustment coefficient.

Optionally, the flight parameter includes the flight speed, a broadcast width and a usage per unit area of the material to be broadcast, and adjustment coefficient determination component 304 includes:

a first linear coefficient determination sub-component, configured to determine a first linear coefficient between a discharge speed and the rotation speed of the electric motor according to the actual discharge amount, the calibration rotation speed and the calibration duration;

a second linear coefficient determination sub-component, configured to determine a second linear coefficient between the discharge speed and the flight speed according to the broadcast width and the usage per unit area; and

an adjustment coefficient determination sub-component, configured to determine the adjustment coefficient between the flight speed and the rotation speed of the electric motor based on the first linear coefficient and the second linear coefficient.

Optionally, the calibration rotation speed is 0.5 times as fast as the maximum rotation speed of the electric motor.

The calibration control component 302 includes:

a first control sub-component, configured to control the electric motor to run at a speed 0.5 times as fast as the maximum rotation speed within the calibration duration to discharge the material to be broadcast.

The first linear coefficient determination sub-component includes:

a product calculation unit, configured to calculate a product of the calibration duration and 0.5 times as fast as the maximum rotation speed; and a first linear coefficient determination unit, configured to take a ratio of the actual discharge amount to the product as a first linear coefficient.

Optionally, the calibration instruction includes a plurality of calibration rotation speeds.

The calibration control component 302 includes:

a second control sub-component, configured to sequentially control the electric motor to run at each calibration speed for the calibration duration, so as to discharge the material to be broadcast.

The first linear coefficient determination sub-component includes:

a linear curve fitting unit, configured to generate a linear curve of the discharge speed and the rotation speed of the electric motor according to each calibration rotation speed and an actual discharging amount corresponding to each calibration rotation speed; and

a second linear coefficient determination unit, configured to determine the first linear coefficient between the discharge speed and the rotation speed of the electric motor according to the linear curve.

Optionally, the second linear coefficient determination sub-component includes:

a broadcast width determination unit, configured to determine a broadcast width according to the flight altitude; and

a third linear coefficient determination unit, configured to calculate a product of the broadcast width and the usage per unit area, to obtain the second linear coefficient between the discharge speed and the flight speed.

Optionally, the broadcast dosage adjustment component 305 includes:

a real-time flight speed acquisition sub-component, configured to acquire a real-time flight speed of the unmanned aerial vehicle;

a target rotation speed calculation sub-component, configured to calculate a target rotation speed of the electric motor according to the real-time flight speed and the adjustment coefficient; and

an adjustment sub-component, configured to adjust the rotation speed of the electric motor to the target rotation speed to adjust a broadcast dosage of the material to be broadcast.

The device for adjusting the broadcast dosage provided by the embodiment of the disclosure may execute a method for adjusting a broadcast dosage provided by any embodiment of the disclosure, and has corresponding functional components and beneficial effects upon execution of the method.

The embodiment of the disclosure further provides an unmanned aerial vehicle. The unmanned aerial vehicle includes one or more processors and a storage device which is configured to store one or more programs. When the one or more programs are executed by the one or more processors, the one or more processors may implement the method for adjusting the broadcast dosage according to any one of the embodiments of the disclosure.

An embodiment of the disclosure further provides a computer readable storage medium. An instruction in the storage medium, when executed by a processor of an apparatus, enables the apparatus to execute the method for adjusting the broadcast dosage as described in the above method embodiment.

Each functional component provided by the embodiment of the present disclosure may be run in the device for adjusting the broadcast dosage or a similar computing device, and may also be stored as part of the storage medium.

Those skilled in the art may understand that whole or partial steps in the various methods of the above embodiments may be completed by instructing relevant hardware of the device for adjusting the broadcast dosage through the program, which may be stored in the computer readable storage medium of the device for adjusting the broadcast dosage.

It should be noted that as for an embodiment of the device, the unmanned aerial vehicle and the storage medium, since this embodiment is basically similar to an embodiment of the method, description is relatively simple, and partial description of the embodiment of the method may be referred to for relevant contents.

From the above description of the embodiment, it may be clearly understood by those skilled in the art that the disclosure may be implemented by means of software and necessary general hardware, and may be certainly realized by the hardware, among which the former is a preferred embodiment in many cases. Based on such understanding, a technical solution of the disclosure can be embodied in the form of software products in essence or in part that contributes to related technologies, the computer software products may be stored in the computer readable storage medium, such as a floppy disk, a Read-Only Memory (ROM for short), a Random Access Memory (RAM for short), a FLASH memory, a hard disk or optical disk, etc. of a computer, and several instructions are included to make computer equipment (which may be a robot, a personal computer, a server, network equipment, etc.) execute the method for adjusting the broadcast dosage described in any embodiment of the disclosure.

It is worth noting that all the units and components included in the device for adjusting the broadcast dosage above are merely divided according to a functional logic, but are not limited to the above division, as long as the corresponding functions may be realized. In addition, particular names of each functional unit are merely for the convenience of mutual distinguishing, and are not used to limit the protection scope of the disclosure.

It should be understood that various portions of the disclosure may be implemented through hardware, software, firmware, or a combination thereof. In the above embodiment, a plurality of steps or methods may be implemented by software or firmware stored in a memory and executed by a suitable instruction execution device. For example, if implemented through the hardware, as in another embodiment, they may be implemented by any one or a combination of the following technologies known in the art: discrete logic circuits of logic gates for realizing logic functions on data signals, application-specific integrated circuits with appropriate combinational logic gates, programmable gate arrays (PGA), field programmable gate arrays (FPGA), etc.

The terms "first", "second", etc. in the specification and claims of the present invention and the above accompanying drawings are used to distinguish similar objects, but are not necessarily used to describe a specific sequence or a precedence order. It should be understood that data used in this way can be interchanged under appropriate circumstances, such that the embodiment of the present disclosure described herein may be implemented in a sequence other than those illustrated or described herein. In addition, terms "including", "having", and any variations thereof are intended to cover non-exclusive inclusions, for example, processes, methods, systems, products, or devices that contain a series of steps or assemblies need not be limited to those clearly listed steps or assemblies, but may include other steps or assemblies not explicitly listed or inherent to the processes, methods, products, or devices. A description with reference to the terms "one embodiment", "some embodiments", "examples", "particular examples", "some examples", etc. means that a particular feature, structure, material or characteristic described in conjunction with this embodiment or example, which is included in at least one embodiment or example of the disclosure. In this specification, schematic expressions of the above terms do not necessarily refer to the same embodiment or example. Furthermore, the particular features, structures, materials or characteristics described may be combined in any one or more embodiments or examples in a suitable manner.

It should be noted that steps shown in the flowchart of the accompanying drawings may be executed, for example, in a computer system for a set of computer-executable instructions, and although a logical sequence is shown in the flowchart, in some cases, the steps shown or described may be executed in a sequence different from that stated herein.

It should be noted that the above-mentioned is merely a preferred embodiment of the disclosure and an applied technical principle. Those skilled in the art may understand that the disclosure is not limited to a specific embodiment described herein, and may make various obvious changes, readjustments and substitutions without departing from the protection scope of the disclosure. Therefore, although the disclosure has been described relatively in detail through the above embodiment, the disclosure is not merely limited to the above embodiment, but may also include more other equivalent embodiments without departing from the concept of the disclosure, and the scope of the disclosure is determined by the scope of the appended claims.

**Industrial applicability**

A technical solution provided by the embodiment of the disclosure may be applied in the process of adjusting the broadcast dosage. After the calibration instruction including the calibration rotation speed and the calibration duration is received, the electric motor is controlled to run at the calibration rotation speed within the calibration duration to discharge the material to be broadcast, and the adjustment coefficient between the flight speed and the rotation speed of the electric motor is determined according to the flight parameter and the actual discharge amount of the material to be broadcast discharged by the material taking wheel within the calibration duration, such that the rotation speed of the electric motor may be adjusted according to the adjustment coefficient to adjust the broadcast dosage during broadcast of the material to be broadcast. In a calibration stage of the embodiment of the disclosure, the electric motor is controlled to run at the calibration rotation speed for the calibration duration to discharge different materials to be broadcast, thereby acquiring an adjustment coefficient between the flight speed and the rotation speed of the electric motor, realizing the rotation speed of the electric motor for driving the material taking wheel at different flight speeds of the unmanned aerial vehicle for the different materials to be broadcast, and realizing accurate variable broadcast.

**Claims**

1. A method for adjusting a broadcast dosage, applied to an unmanned aerial vehicle for broadcast through a material taking wheel driven by an electric motor, the method comprising:

   receiving a calibration instruction, the calibration instruction comprising a calibration rotation speed and calibration duration;
   controlling the electric motor to run at the calibration rotation speed within the calibration duration to discharge a material to be broadcast;
   acquiring a flight parameter and an actual discharge amount of the material to be broadcast discharged by the material taking wheel within the calibration duration;
   determining an adjustment coefficient between a flight speed and a rotation speed of the electric motor according to the flight parameter and the actual discharge amount; and
   adjusting, in a process of broadcasting the material to be broadcast, the rotation speed of the electric motor according to the adjustment coefficient.

2. The method as claimed in claim 1, wherein the flight parameter comprises the flight speed, a flight altitude and a usage per unit area of the material to be broadcast, and the step of determining an adjustment coefficient between a flight speed and a rotation speed of the electric motor according to the flight parameter and the actual discharge amount comprises:

   determining a first linear coefficient between a discharge speed and the rotation speed of the electric motor according to the actual discharge amount, the calibration rotation speed and the calibration duration;
   determining a second linear coefficient between the discharge speed and the flight speed according to the flight altitude and the usage per unit area; and
   determining the adjustment coefficient between the flight speed and the rotation speed of the electric motor based on the first linear coefficient and the second linear coefficient.

3. The method as claimed in claim 2,

wherein the calibration rotation speed is 0.5 times as fast as a maximum rotation speed of the electric motor, and the step of controlling the electric motor to run at the calibration rotation speed within the calibration duration to discharge a material to be broadcast comprises: controlling the electric motor to run at a speed 0.5 times as fast as the maximum rotation speed within the calibration duration to discharge the material to be broadcast; and the step of determining the first linear coefficient between a discharge speed and the rotation speed of the electric motor according to the actual discharge amount, the calibration rotation speed and the calibration duration comprises: calculating a product of the calibration duration and the 0.5 times as fast as the maximum rotation speed; and using a ratio of the actual discharge amount to the product as the first linear coefficient.

4. The method as claimed in claim 2, wherein the calibration instruction comprises a plurality of calibration rotation speeds, and the step of controlling the electric motor to run at the calibration rotation speed within the calibration duration to discharge a material to be broadcast comprises:

sequentially controlling the electric motor to run at each calibration speed for the calibration duration, so as to discharge the material to be broadcast; and
the step of determining the first linear coefficient between a discharge speed and the rotation speed of the electric motor according to the actual discharge amount, the calibration rotation speed and the calibration duration comprises:

generating a linear curve of the discharge speed and the rotation speed of the electric motor according to each calibration rotation speed and an actual discharging amount corresponding to each calibration rotation speed; and
determining the first linear coefficient between the discharge speed and the rotation speed of the electric motor according to the linear curve.

5. The method as claimed in claim 2, wherein the step of determining a second linear coefficient between the discharge speed and the flight speed according to the flight altitude and the usage per unit area comprises:

determining a broadcast width according to the flight altitude; and
calculating a product of the broadcast width and the usage per unit area to obtain the second linear coefficient between the discharge speed and the flight speed.

6. The method as claimed in claims 1, wherein the adjusting the rotation speed of the electric motor according to the adjustment coefficient comprises:

acquiring a real-time flight speed of the unmanned aerial vehicle;
calculating a target rotation speed of the electric motor according to the real-time flight speed and the adjustment coefficient; and
adjusting the rotation speed of the electric motor to the target rotation speed to adjust the broadcast dosage of the material to be broadcast.

7. A device for adjusting a broadcast dosage, applied to an unmanned aerial vehicle for broadcast through a material taking wheel driven by an electric motor, the device comprising one or more processors and one or more memories for storing program units, wherein the program unit is executed by the processor, and the program unit comprises:

a calibration instruction receiving component, configured to receive a calibration instruction, the calibration instruction comprising a calibration rotation speed and calibration duration;
a calibration control component, configured to control the electric motor to run at the calibration rotation speed within the calibration duration to discharge a material to be broadcast;
a parameter acquisition component, configured to acquire a flight parameter and an actual discharge amount of the material to be broadcast discharged by the material taking wheel within the calibration duration;
an adjustment coefficient determination component, configured to determine an adjustment coefficient between a flight speed and a rotation speed of the electric motor according to the flight parameter and the actual discharge amount; and
a broadcast dosage adjustment component, configured to adjust, in a process of broadcasting the material to be broadcast, the rotation speed of the electric motor according to the adjustment coefficient.

8. The device as claimed in claim 7, wherein the flight parameter comprises the flight speed, a broadcast width and a usage per unit area of the material to be broadcast, and the adjustment coefficient determination component comprises:

a first linear coefficient determination sub-component, configured to determine a first linear coefficient between a discharge speed and the rotation speed of the electric motor according to the actual discharge amount, the calibration rotation speed and the calibration duration;
a second linear coefficient determination sub-component, configured to determine a second linear coefficient between the discharge speed and the flight speed according to the broadcast width and the usage per unit area; and
an adjustment coefficient determination sub-component, configured to determine the adjustment coefficient between the flight speed and the rotation speed of the electric motor based on the first linear coefficient and the second linear coefficient.

9. The device as claimed in claim 8, wherein the calibration rotation speed is 0.5 times as fast as a maximum rotation speed of the electric motor, and

the calibration control component comprises:
a first control sub-component, configured to control the electric motor to run at a speed 0.5 times as fast as the maximum rotation speed within the calibration duration to discharge the material to be broadcast; and
the first linear coefficient determination sub-component comprises:
a product calculation unit, configured to calculate a product of the calibration duration and 0.5 times as fast as the maximum rotation speed; and a first linear coefficient determination unit, configured to take a ratio of the actual discharge amount to the product as a first linear coefficient.

10. The device as claimed in claim 8, wherein the calibration instruction comprises a plurality of calibration rotation speeds, and the calibration control component comprises:

a second control sub-component, configured to sequentially control the electric motor to run at each calibration speed for the calibration duration, so as to discharge the material to be broadcast; and
the first linear coefficient determination sub-component comprises:

a linear curve fitting unit, configured to generate a linear curve of the discharge speed and the rotation speed of the electric motor according to each calibration rotation speed and an actual discharging amount corresponding to each calibration rotation speed; and
a second linear coefficient determination unit, configured to determine the first linear coefficient between the discharge speed and the rotation speed of the electric motor according to the linear curve.

11. The device as claimed in claim 8, wherein the second linear coefficient determination sub-component comprises a broadcast width determination unit, configured to determine a the broadcast width according to the flight altitude; and a third linear coefficient determination unit, configured to calculate a product of the broadcast width and the usage per unit area, to obtain the second linear coefficient between the discharge speed and the flight speed.

12. The device as claimed in claim 7, wherein the broadcast dosage adjustment component comprises:

a real-time flight speed acquisition sub-component, configured to acquire a real-time flight speed of the unmanned aerial vehicle;
a target rotation speed calculation sub-component, configured to calculate a target rotation speed of the electric motor according to the real-time flight speed and the adjustment coefficient; and
an adjustment sub-component, configured to adjust the rotation speed of the electric motor to the target rotation speed to adjust a broadcast dosage of the material to be broadcast.

13. An unmanned aerial vehicle, comprising:

one or more processors; and
a storage device, configured to store one or more programs, wherein
when the one or more programs are executed by the one or more processors, the one or more processors implement the method for adjusting the broadcast dosage as claimed in claim 1.

**14.** A computer readable storage medium, having a computer program stored thereon, wherein the program implements, when executed by a processor, the method for adjusting the broadcast dosage as claimed in any one of claims 1-6.

a calibration instruction is received the calibration instruction including a calibration rotation speed and calibration duration

S101

The electric motor is controlled to run at the calibration rotation speed within the calibration duration to discharge a material to be broadcast

S102

A flight parameter and an actual discharge amount of the materia to be broadcast discharged by the material taking device within the calibration duration are acquired

S103

An adjustment coefficient between a flight speed and a rotation speed of the electric motor is determined according to the flight parameter and the actual discharge amount

S104

In a process of broadcasting the material to be broadcast the rotation speed of the electric motor is adjusted according to the adjustment coefficient

S105

Fig. 1

Fig.2

A calibration instruction is received the calibration instruction including a calibration rotation speed and calibration duration ⟩ S201

The electric motor is controlled to run at the calibration rotation speed within the calibration duration to discharge a material to be broadcast ⟩ S202

A flight parameter and an actual discharge amount of the material to be broadcast discharged by the material taking device within the calibration duration are acquired ⟩ S203

A first linear coefficient between a discharge speed and the rotation speed of the electric motor is determined according to the actual discharge amount the calibration rotation speed and the calibration duration ⟩ S204

A second linear coefficient between the discharge speed and the flight speed is determined according to the flight altitude and the usage per unit area ⟩ S205

An adjustment coefficient between the flight speed and the rotation speed of the electric motor is determined based on the first linear coefficient and the second linear coefficient ⟩ S206

A real-time flight speed of the unmanned aerial vehicle is acquired ⟩ S207

A target rotation speed of the electric motor is calculated according to the real-time flight speed and the adjustment coefficient ⟩ S208

The rotation speed of the electric motor is adjusted to the target rotation speed to adjust the broadcast dosage of the material to be broadcast ⟩ S209

Fig. 3:

Fig. 4

a calibration instruction is sent at a ground station — S1

the calibration instruction is received by a broadcast device and a calibration mode is entered — S2

the broadcast device controls an electric motor to rotate at the calibration rotation speed for the calibration duration and a corresponding actual discharge amount within the calibration duration is acquired — S3

the actual discharge amount a usage per unit area a flight altitude a maximum rotation speed and a flight speed are set on the ground station — S4

an unmanned aerial vehicle enters a broadcast mode and the broadcast device acquires a real-time flight speed of the unmanned aerial vehicle through the flight control component — S5

the unmanned aerial vehicle calculates a target speed of the electric motor according to the usage per unit area the broadcast width the calibration duration the maximum speed of the electric motor and the actual discharge amount — S6

the rotation speed of the electric motor is adjusted to the target speed to realize variable broadcast — S7

Fig. 5

| Calibration instruction receiving component | ⌐301 |
| Calibration control component | ⌐302 |
| Parameter control component | ⌐303 |
| Adjustment coefficient determination component | ⌐304 |
| Broadcast dosage adjustment component | ⌐305 |

Fig. 6

## INTERNATIONAL SEARCH REPORT

| International application No. |
|---|
| **PCT/CN2020/075040** |

### A.  CLASSIFICATION OF SUBJECT MATTER

B64D 1/16(2006.01)i;  A01M 7/00(2006.01)i;  A01M 9/00(2006.01)i

According to International Patent Classification (IPC) or to both national classification and IPC

### B.  FIELDS SEARCHED

Minimum documentation searched (classification system followed by classification symbols)

B64D,  A01M

Documentation searched other than minimum documentation to the extent that such documents are included in the fields searched

Electronic data base consulted during the international search (name of data base and, where practicable, search terms used)

VEN, CNKI, CNABS: 撒播, 调整, 调节, 转速, 校准, 排料, 变量; sow+, adjust+, speed, spread+, calibrat+, discharg+

### C.  DOCUMENTS CONSIDERED TO BE RELEVANT

| Category* | Citation of document, with indication, where appropriate, of the relevant passages | Relevant to claim No. |
|---|---|---|
| PX | CN 109774943 A (XAG CO., LTD.) 21 May 2019 (2019-05-21)<br>claims, description, pages 4-10, and figures 1-6 | 1-14 |
| A | CN 106416530 A (SOUTH CHINA AGRICULTURAL UNIVERSITY et al.) 22 February 2017 (2017-02-22)<br>description, pages 3 and 4, and figures 1-8 | 1-14 |
| A | CN 108791894 A (NANTONG VOCATIONAL UNIVERSITY) 13 November 2018 (2018-11-13)<br>entire document | 1-14 |
| A | CN 106094532 A (SOUTH CHINA AGRICULTURAL UNIVERSITY) 09 November 2016 (2016-11-09)<br>entire document | 1-14 |
| A | CN 207428294 U (GUANGZHOU XAIRCRAFT TECHNOLOGY CO., LTD.) 01 June 2018 (2018-06-01)<br>entire document | 1-14 |
| A | JP 2006149265 A (YANMAR CO., LTD.) 15 June 2006 (2006-06-15)<br>entire document | 1-14 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 April 2020** | **26 April 2020** |

| Name and mailing address of the ISA/CN | Authorized officer |
|---|---|
| **China National Intellectual Property Administration (ISA/ CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT
Information on patent family members

| International application No. |
|---|
| **PCT/CN2020/075040** |

| Patent document cited in search report | | | Publication date (day/month/year) | Patent family member(s) | | | Publication date (day/month/year) |
|---|---|---|---|---|---|---|---|
| CN | 109774943 | A | 21 May 2019 | None | | | |
| CN | 106416530 | A | 22 February 2017 | CN | 106416530 | B | 16 August 2019 |
| CN | 108791894 | A | 13 November 2018 | None | | | |
| CN | 106094532 | A | 09 November 2016 | None | | | |
| CN | 207428294 | U | 01 June 2018 | None | | | |
| JP | 2006149265 | A | 15 June 2006 | JP | 4286765 | B2 | 01 July 2009 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910146436